(19) **Europäisches Patentamt / European Patent Office / Office européen des brevets**

(11) **EP 4 653 191 A1**

(12) **EUROPEAN PATENT APPLICATION**
published in accordance with Art. 153(4) EPC

(43) Date of publication:
26.11.2025 Bulletin 2025/48

(21) Application number: 24744630.5

(22) Date of filing: 15.01.2024

(51) International Patent Classification (IPC):
**B32B 27/18** (2006.01)   **B32B 27/30** (2006.01)
**B65D 65/40** (2006.01)

(52) Cooperative Patent Classification (CPC):
**B32B 27/18; B32B 27/30; B65D 65/40**

(86) International application number:
**PCT/JP2024/000869**

(87) International publication number:
**WO 2024/154708 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.01.2023 JP 2023007431

(71) Applicant: **Toppan Holdings Inc.**
**Tokyo 110-0016 (JP)**

(72) Inventors:
• YAMAGUCHI, Keisuke
Tokyo 110-0016 (JP)
• ICHIMARU, Mao
Tokyo 110-0016 (JP)
• MORI, Ryohei
Tokyo 110-0016 (JP)

(74) Representative: **Hoffmann Eitle**
**Patent- und Rechtsanwälte PartmbB**
**Arabellastraße 30**
**81925 München (DE)**

(54) **MULTILAYER BODY, METHOD FOR PRODUCING MULTILAYER BODY, PACKAGING BAG AND PACKAGE**

(57)    The laminate of the present disclosure includes a substrate and a barrier layer containing a barrier composition. The barrier composition contains a water-soluble polymer, an inorganic layered compound, and at least one of a metal alkoxide and a hydrolysate thereof. A mass ratio of the water-soluble polymer to the inorganic layered compound in the barrier composition is 0.3 or more and 3.0 or less.

# FIG.1

# EP 4 653 191 A1

**Description**

[Technical Field]

The present disclosure relates to a laminate, a production method of a laminate, a packaging bag, and a packaging body.

[Background Art]

A packaging bag used for packaging contents is required to have barrier performance in order to suppress quality deterioration of the contents. Therefore, a barrier laminate having barrier performance against oxygen and water vapor which significantly affect quality deterioration has been variously studied as a material of a packaging bag.

PTL 1 discloses a technique for improving barrier performance of a packaging material by sequentially laminating a transparent primer layer, a vapor-deposited thin film layer, and a barrier composite coating on one side of a polypropylene substrate. PTL 2 discloses a barrier laminate in which two barrier layers having different chemical compositions are laminated. Further, PTL 3 discloses a laminated film including a resin substrate, a primer layer, and a coating layer in which an inorganic layered compound is used for the coating layer.

[Citation List]

[Patent Literatures]

PTL 1: JP 2000-254994 A
PTL 2: JP 2020-069801 A
PTL 3: WO 2016/158794

[Summary of the Invention]

[Technical Problem]

From the viewpoint of improving barrier performance against water vapor and oxygen, providing a vapor-deposited thin film layer having barrier performance to a laminate or laminating two barrier layers complicates the production process and increases the production cost. On the other hand, when barrier performance is imparted by a single layer without using a vapor-deposited thin film layer, the film is thickened in order to obtain sufficient barrier performance, and coating suitability may deteriorate. The present disclosure provides a laminate which is applied a barrier composition on a substrate and has sufficient barrier performance against oxygen and water vapor, and a production method of a laminate. The present disclosure further provides a packaging bag and a packaging body each including such a laminate.

[Solution to Problem]

An aspect of the present disclosure is a laminate including a substrate and a barrier layer formed of a barrier composition, in which the barrier composition contains a water-soluble polymer, an inorganic layered compound, and at least one of a metal alkoxide and a hydrolysate thereof and in which a mass ratio of the water-soluble polymer to the inorganic layered compound in the barrier composition is 0.3 or more and 3.0 or less.

In the laminate, the mass ratio of the water-soluble polymer to the inorganic layered compound in the barrier composition is 0.3 or more and 3.0 or less. Such a laminate has a barrier layer including a good balance of the water-soluble polymer and the inorganic layered compound which contribute to barrier performance against oxygen and water vapor, and can have sufficiently high barrier performance against oxygen and water vapor even if the layer having barrier performance on the substrate is a single layer.

An aspect of the present disclosure is a production method of a laminate including: a step of preparing a raw material composition containing a water-soluble polymer, an inorganic layered compound, and at least one of a metal alkoxide and a hydrolysate thereof in which a mass ratio of the water-soluble polymer to the inorganic layered compound is 0.3 or more and 3.0 or less; a step of coating a substrate with a dispersion liquid containing the raw material composition; and a step of forming a barrier layer containing a barrier composition from the dispersion liquid by heating.

According to the production method of a laminate, the laminate having on the substrate the barrier layer containing the barrier composition can be provided. Therefore, the vapor deposition step and the coating step of another barrier layer are not necessary, the production process can be simplified, and the costs of facilities can be reduced. Further, the laminate obtained by the production method has sufficiently high barrier performance against oxygen and water vapor.

An aspect of the present disclosure provides a packaging bag including the laminate. When including the laminate, the packaging bag can provide a packaging bag having sufficiently high barrier performance against water vapor and oxygen.

An aspect of the present disclosure provides a packaging body including the packaging bag and a product contained in a container section of the packaging bag. When containing the product in the packaging bag having the laminate, the packaging body can sufficiently suppress the quality deterioration of the contained product due to water vapor and oxygen.

[Advantageous Effects of the Invention]

In an aspect, the present disclosure can provide a laminate which is applied a barrier composition on a substrate and has sufficient barrier performance against oxygen and water vapor, and a production method of a laminate. The present disclosure can further provide a packaging bag and a packaging body each including such a laminate.

[Brief Description of the Drawings]

Fig. 1 is a schematic view of a cross section of a laminate.
Fig. 2 is a schematic view of a packaging bag.
Fig. 3 is a graph illustrating light transmittances of laminates of Examples 1, 3, 8, and 10 and Comparative Example 2.

[Description of the Embodiments]

Hereinafter, the embodiments of the present disclosure will be described. However, the following embodiments are examples for explaining the present disclosure and do not intend to limit the present disclosure to the following contents. The upper limit values or the lower limit values of the numerical ranges specified herein may be replaced with any value described in Examples. In the present disclosure, the numerical range described in the form of "a to b" is a numerical range containing a and b in which the lower limit is a, and the upper limit is b. Further, the individually described upper limit values and lower limit values may be optionally combined. Unless otherwise stated, the materials and components illustrated as examples herein can be used individually or in combination of two or more. In the description, identical elements or elements with identical functions may be given the same reference signs, and redundant description will be omitted. The positional relationships such as left, right, upper, and lower used in the description are based on the positional relationships illustrated in the drawings, unless otherwise stated.

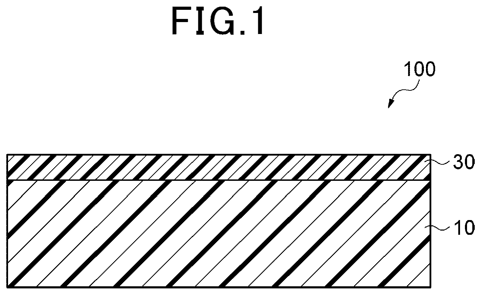

Fig. 1 is a schematic cross-sectional view of a laminate according to an embodiment. A laminate 100 includes a barrier layer 30 on one surface of a substrate 10.

The substrate 10 is not particularly limited and may be a resin film, paper, and the like. Examples of the resin film include: polyester films such as polyethylene terephthalate (PET) and polyethylene naphthalate (PEN); polyolefin films such as polyethylene and polypropylene; polystyrene films; polyamide films such as 66-nylon; polycarbonate films, as well as polyacrylonitrile, and engineering plastic films such as a polyimide film. Further, at least one selected from a homopolymer layer (film), a random copolymer layer (film), and a block copolymer layer (film) may be included, or a laminate of multiple layers of the same type may be included. From the viewpoint of balancing oxygen barrier performance and water vapor barrier performance, PET is preferably used.

The resin film may be either stretched or unstretched. The resin film may be a laminate of at least one stretched film and at least one unstretched film. When the substrate 10 has an optionally biaxially stretched film, mechanical strength and dimensional stability can be improved. From the viewpoint of further improving oxygen barrier performance, a biaxially stretched polypropylene film is preferably used.

The resin film may be a vapor-deposited film from the viewpoint of further improving water vapor barrier performance. The vapor-deposited film may be a film in which a metal such as aluminum or a metal oxide such as alumina is previously vapor-deposited on a substrate. Examples of the vapor-deposited film include an aluminum vapor-deposited film, an alumina vapor-deposited film, and silica vapor-deposited film, and an aluminum vapor-deposited film is preferable.

The paper used for the substrate 10 is not particularly limited as long as it contains plant-derived pulp as the main component and is commonly used. Examples of the paper include bleached paper, unbleached kraft paper, woodfree paper, paperboard, liner paper, coated paper, one-side glazed paper, glassine paper, and graphene paper.

The above-described substrates 10 may be used individually or in combination of two or more. The substrate 10 may be a laminate of multiple layers of the same or different type.

The thickness of the substrate 10 is not particularly limited, and may be, for example, 3 $\mu$m or more and 200 $\mu$m or less, or 6 $\mu$m or more and 30 $\mu$m or less. The thickness may be adjusted depending on the applications or required characteristics. The substrate 10 may contain at least one additive selected from a filler, an antistatic agent, a plasticizer, a lubricant, an antioxidant, and the like. The surface of the substrate 10 may be subjected to at least one selected from a chemical treatment, a solvent treatment, a corona treatment, a plasma treatment, and an ozone treatment.

The barrier layer 30 is formed with a barrier composition. The barrier composition contains a water-soluble polymer, at least one of a metal alkoxide and a hydrolysate thereof, and an inorganic layered compound. The barrier composition, which contains the inorganic layered compound, can improve oxygen barrier performance and water vapor barrier performance of the barrier layer 30 formed with the barrier composition. The laminate 100 having such a barrier layer 30 can have high barrier performance even when it does not have a vapor-deposited thin film layer and a plurality of barrier layers on the substrate 10.

The mass ratio of the water-soluble polymer to the inorganic layered compound in the barrier composition is 0.3 or more and 3.0 or less, preferably 0.5 or more and 2.5 or less, and more preferably 0.7 or more and 2.0 or less. When the mass ratio is more than 3.0, the ratio of the inorganic layered compound decreases, and oxygen barrier performance and water vapor barrier performance of the barrier layer 30 deteriorate. On the other hand, when the mass ratio is less than 0.3, the ratio of the inorganic layered compound becomes excessive, the barrier layer 30 becomes cloudy, coating suitability deteriorates, and the thickness is likely to vary.

The inorganic layered compound in the barrier composition is an inorganic compound having a layered structure. Examples of the inorganic layered compound include clay minerals represented by kaolinite group, smectite group, and mica group. Further, the inorganic layered compound may be amorphous. The barrier composition may contain one or a combination of two or more of these inorganic layered compounds. The particle diameter of the inorganic layered compound is, for example, 0.1 $\mu$m or more and 10 $\mu$m or less. The aspect ratio of the inorganic layered compound is, for example, 50 or more and 5000 or less.

The inorganic layered compound preferably contains montmorillonite and amorphous synthetic mica from the viewpoint of further improving oxygen barrier performance and water vapor barrier performance of the barrier layer 30, and more preferably contains amorphous synthetic mica from the viewpoint of improving transparency of the laminate 100.

Synthetic mica has high miscibility with the water-soluble polymer and has less impurities compared with natural mica. Therefore, when the inorganic layered compound contains synthetic mica, deterioration of gas barrier performance derived from impurities and deterioration of film cohesive force can be suppressed. Further, synthetic mica has a fluorine atom in the structure and thus also contributes to suppressing the humidity dependence of gas barrier performance of a coating film formed of an aqueous coating agent. Synthetic mica has an aspect ratio higher than other types of inorganic layered compounds, so that a labyrinth effect works more effectively, and synthetic mica particularly contributes to developing high gas barrier performance of a coating film formed of an aqueous coating agent.

The content of the inorganic layered compound in the barrier composition may be, for example, 15 mass% or more and 30 mass% or less. The lower limit of the content of the inorganic layered compound in the barrier composition may be 20 mass% from the viewpoint of further reducing oxygen permeability and water vapor permeability of the barrier layer 30. The upper limit of the content of the inorganic layered compound in the barrier composition may be 25 mass% from the viewpoint of further reducing oxygen permeability and water vapor permeability of the barrier layer 30. Note that the content of each component in the barrier composition is usually the same as the blending ratio when preparing a raw material composition. Therefore, the content of each component can be determined from the blending ratio. However, the content of each component may be determined by a known analysis method.

The water-soluble polymer is not particularly limited, and may be, for example, a polyvinyl alcohol polymer, an alcohol polymer such as starch, methylcellulose, and carboxyl methylcellulose, or an acryl polyol polymer. From the viewpoint of further improving oxygen barrier performance and water vapor barrier performance, the water-soluble polymer preferably contains a polyvinyl alcohol polymer. The polyvinyl alcohol polymer may be polyvinyl alcohol or may be modified polyvinyl alcohol in which a functional group such as a carboxyl group and/or a carbonyl group is introduced to polyvinyl alcohol. The number-average molecular weight of the water-soluble polymer is, for example, 40000 or more and 180000 or less.

The polymerization degree of polyvinyl alcohol and modified polyvinyl alcohol is preferably 1500 or more and 4200 or less and more preferably 1700 or more and 3000 or less. When the polymerization degree of at least one of polyvinyl alcohol and modified polyvinyl alcohol is the lower limit value or more, the compactness of the barrier composition increases, and the gas barrier performance of the barrier layer 30 can be further enhanced. When the polymerization degree is the upper limit value or less, a dispersion liquid of the barrier composition can have an appropriate viscosity, and coating performance improves. This improves thickness uniformity of the barrier layer 30 and can further enhance gas barrier performance.

The polyvinyl alcohol-based water-soluble polymer can be obtained by, for example, saponifying (or partially saponifying) polyvinyl acetate. The remaining acetic acid groups in this water-soluble polymer may be several tens of percent or only several percent. The polyvinyl alcohol may be completely saponified type.

The content of the water-soluble polymer in the barrier composition is, for example, 15 mass% or more and 35 mass% or less. The lower limit of the content of the water-soluble polymer in the barrier composition may be 20 mass%, from the viewpoint of further reducing oxygen permeability and water vapor permeability of the barrier layer 30. The upper limit of the content of the water-soluble polymer in the barrier composition may be 30 mass% or 25 mass%, from the viewpoint of further reducing oxygen permeability and water vapor permeability of the barrier layer 30.

The total of the mass ratio rates of the inorganic layered compound and the water-soluble polymer in the barrier composition is preferably 30 mass% or more and 60 mass% or less, more preferably 35 mass% or more and 55 mass% or less, and further preferably 40 mass% or more and 50 mass% or less. When the total of the mass ratio ratios of the inorganic layered compound and the water-soluble polymer in the barrier composition is within the above-described range, the oxygen permeability and water vapor permeability of the barrier layer 30 can be further reduced.

Examples of the metal alkoxide and the hydrolysate thereof contained in the barrier composition include compounds represented by the general formula $M(OR)_n$, such as tetraethoxysilane $[Si(OC_2H_5)_4]$ and triisopropoxy aluminum $[Al(OC_3H_7)_3]$, and hydrolysates thereof. These may be used individually or in combination of two or more.

The total content of the metal alkoxide and the hydrolysate thereof in the barrier composition is, for example, 40 mass% or more and 70 mass% or less. From the viewpoint of further reducing oxygen permeability and water vapor permeability of the barrier layer 30, the lower limit of the total content of the metal alkoxide and the hydrolysate thereof in the barrier composition may be 45 mass%. From the same viewpoint, the upper limit of the total content of the metal alkoxide and the hydrolysate thereof in the barrier composition may be 55 mass%. When the barrier composition contains the metal alkoxide, the water resistance and moisture resistance of the barrier layer 30 improve. This can reduce humidity dependency of the barrier layer 30 and improve gas barrier performance.

The barrier composition may contain at least one of a silane coupling agent and a hydrolysate thereof. An example of the silane coupling agent and the hydrolysate thereof is a silane coupling agent having an organic functional group. Examples of such a silane coupling agent and a hydrolysate thereof include ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyldimethoxysilane, and hydrolysates thereof. These may be used individually or in combination of two or more.

The at least one of a silane coupling agent and a hydrolysate thereof preferably has an epoxy group as the organic functional group. Examples of the silane coupling agent having an epoxy group include γ-glycidoxypropyltrimethoxysilane and β-(3,4-epoxycyclohexyl)ethyltrimethoxysilane. The silane coupling agent having an epoxy group and the hydrolysate thereof may contain an organic functional group other than an epoxy group, such as a vinyl group, an amino group, a methacrylic group, or an ureyl group.

The organic functional group in the silane coupling agent having an organic functional group and the hydrolysate thereof can interact with a hydroxyl group of the water-soluble polymer thereby to further improve oxygen barrier performance and water vapor barrier performance of the barrier layer 30. In particular, the epoxy group in the silane coupling agent and the hydrolysate thereof and the hydroxyl group of polyvinyl alcohol can form the barrier layer 30 which is excellent especially in oxygen barrier performance and water vapor barrier performance. Further, with the silane coupling agent and the hydrolysate thereof, the inorganic layered compound in the barrier composition to form the barrier layer 30 improves in miscibility and dispersibility. This can further improve gas barrier performance of the barrier layer 30.

The total content of the silane coupling agent and the hydrolysate thereof in the barrier composition may be, for example, 15 mass% or less. The lower limit of the total content of the silane coupling agent and the hydrolysate thereof in the barrier composition may be 5 mass%, 3 mass%, or 1 mass%, from the viewpoint of further reducing oxygen permeability and water vapor permeability of the barrier layer 30. From the same viewpoint, the upper limit of the total content of the silane coupling agent and the hydrolysate thereof in the barrier composition may be 10 mass% or 15 mass%.

The barrier layer 30 is formed by coating the substrate 10 with a dispersion liquid containing the barrier composition and a dispersion medium and drying the dispersion liquid. The dispersion medium may contain at least one selected from the group consisting of water, alcohol, and acid. With respect to 1 part by mass of the barrier composition, the dispersion medium may contain 10 parts by mass or more and 20 parts by mass or less of water, 3 parts by mass or more and 10 parts by mass or less of alcohol, and 0.1 part by mass or more and 1 part by mass or less of acid. When the dispersion medium contains an acid, the metal alkoxide contained in the barrier composition is hydrolyzed. The pH of the dispersion liquid is preferably 4.1 or less. The pH may be adjusted by the amount of acid added into the dispersion liquid. The dispersion liquid having a pH of 4.1 or less is unlikely to gel and has high coating suitability. The barrier layer 30 obtained by drying such a dispersion liquid is small in thickness variance and excellent in thickness uniformity. From the viewpoint of further improving coating suitability of the dispersion liquid, the pH of the dispersion liquid may be 4.0 or less, and is preferably 3.8 or less, more preferably 3.5 or less, and further preferably 3.2 or less. From the viewpoint of suppressing discoloration, the lower limit of the pH may be, for example, 1.5 or 2.0. The pH is preferably 1.5 or more and 4.1 or less, more preferably 1.5 or more and 4.0 or less, and further preferably 2.0 or more and 3.8 or less.

The light transmittance of the dispersion liquid at a wavelength of 350 nm or more and 800 nm or less may be 60% or more. From the viewpoint of forming a more transparent barrier layer, the light transmittance is preferably 65% or more and more preferably 70% or more. The upper limit of the light transmittance may be, for example, 95% or 90%.

The thickness of the barrier layer 30 is not particularly limited, and may be, for example, 0.1 μm or more and 3.0 μm or less. The thickness may be adjusted depending on the applications or required characteristics. The upper limit of the thickness of the barrier layer 30 may be 2.0 μm or 1.5 μm. When the thickness of the barrier layer 30 is within this range, a packaging bag utilizing the laminate 100 can be made thinner.

The laminate 100 may include a primer layer between the barrier layer 30 and the substrate 10. The primer layer is a layer that contains an organic polymer as the main component, and may also be called a primer layer. When the primer layer is provided between the barrier layer 30 and the substrate 10, adhesiveness between the barrier layer 30 and the substrate 10 can be enhanced.

The content of the organic polymer in the primer layer may be, for example, 70 mass% or more or 80 mass% or more. Examples of the organic polymer include polyols having two or more hydroxyl groups at the polymer terminal, organosilane compounds such as a silane coupling agent and a hydrolysate thereof, reaction products (water-based polyurethane resins) obtained by a two-liquid reaction between the polyols and an isocyanate compound, reaction products between the polyols and a silane coupling agent, polyethyleneimine, and polybutadiene. These organic polymers may be used individually or in combination of two or more.

Examples of the polyols include at least one selected from acrylic polyol, polyvinyl acetal, polyester polyol, polyurethane polyol, and the like. Acrylic polyol may be one obtained by polymerizing an acrylic acid derivative monomer or one obtained by copolymerizing an acrylic acid derivative monomer and another monomer. Examples of the acrylic acid derivative monomer include ethyl methacrylate, hydroxyethyl methacrylate, hydroxypropyl methacrylate, and hydroxybutyl methacrylate. An example of the monomer to be copolymerized with the acrylic acid derivative monomer is styrene.

The primer layer can be formed by blending the above-described components at given ratios in an organic solvent to prepare a mixture liquid and applying the prepared mixture liquid on one surface of the substrate 10. The mixture liquid may contain, for example, curing accelerators such as tertiary amines, imidazole derivatives, metal salt compounds of carboxylic acid, quaternary ammonium salts, and quaternary phosphonium salts; antioxidants such as phenol-based, sulfur-based, and phosphite-based types; leveling agents; fluidity modifiers; catalysts; crosslinking accelerators; and fillers.

The substrate 10 can be coated with the mixture liquid by a known printing method such as offset printing, gravure printing, or silk screen printing, or by a known coating method such as roll coating, knife edge coating, or gravure coating. After coating, the mixture liquid can be heated to, for example, 50 to 200°C and dried and/or cured thereby to form the primer layer on the substrate 10. After forming the primer layer on the substrate 10, the primer layer may be coated with the dispersion liquid to form the barrier layer 30. If the primer layer is not disposed on the substrate 10, the substrate 10 is coated with the dispersion liquid to form the barrier layer 30.

The laminate 100 has excellent oxygen barrier performance. The oxygen permeability of the laminate measured by a Mocon method (isobaric method) in accordance with JIS K 7126-2:2006 may be, for example, 2.0 ml/m$^2$/day or less, 1.0 ml/m$^2$/day or less, or 0.7 ml/m$^2$/day or less. Note that the oxygen permeability in this specification is a value measured under the conditions of atmospheric pressure, 30°C, and 70% RH.

The laminate 100 has excellent water vapor barrier performance. The water vapor permeability of the laminate measured by a Mocon method (isobaric method) in accordance with JIS K 7129:2008 may be, for example, 10 g/m$^2$/day or less, 8.5 g/m$^2$/day or less, 5.0 g/m$^2$/day or less, or 4.0 g/m$^2$/day or less. Note that the water vapor permeability in this specification is a value measured under the conditions of atmospheric pressure, 40°C, and 90% RH.

The oxygen permeability of the barrier layer 30 can be determined by subtracting the actually measured value of oxygen permeability of the substrate alone from the actually measured value of oxygen permeability of the laminate 100, and the water vapor permeability of the barrier layer 30 can be determined by subtracting the actually measured value of water vapor permeability of the substrate alone from the actually measured value of water vapor permeability of the laminate 100. The oxygen permeability of the barrier layer 30 may be 2.0 ml/m$^2$/day or less, 1.0 ml/m$^2$/day or less, 0.8 ml/m$^2$/day or less, or 0.7 ml/m$^2$/day or less. The water vapor permeability of the barrier layer 30 may be, for example, 10.0 g/m$^2$/day or less, 7.0 g/m$^2$/day or less, 5.0 g/m$^2$/day or less, or 4.0 g/m$^2$/day or less. When the oxygen permeability obtained by subtracting the actually measured value of oxygen permeability of the substrate alone from the actually measured value of oxygen permeability of the laminate 100 and the water vapor permeability of the barrier layer 30 obtained by subtracting the actually measured value of water vapor permeability of the substrate alone from the actually measured value of water vapor permeability of the laminate 100 are within the above-described ranges, the laminate 100 can sufficiently increase oxygen barrier performance and water vapor barrier performance of the laminate 100 regardless of the type of the substrate.

A production method of a laminate according to an embodiment includes: a step of preparing a raw material composition containing a water-soluble polymer, an inorganic layered compound, and at least one of a metal alkoxide and a hydrolysate thereof in which a mass ratio of the water-soluble polymer to the inorganic layered compound is 0.3 to 3.0; a step of coating a substrate with a dispersion liquid containing the raw material composition; and a step of forming a barrier layer constituted by a barrier composition from the dispersion liquid by heating. The components and blending amounts of the raw material composition are as described in embodiments of the laminate. Further, in the step of preparing a raw material composition, at least one of a silane coupling agent and a hydrolysate thereof may be added to the raw material composition. The types and blending amounts of the silane coupling agent and the hydrolysate thereof are as described in embodiments of the laminate.

In the step of preparing a raw material composition, the components are mixed as the raw material to prepare a raw material composition. From the viewpoint of simply preparing the raw material composition, the water-soluble polymer and the inorganic layered compound may be previously mixed, and other components may be thereafter mixed thereto. Further, the metal alkoxide may be added in a state of being hydrolyzed by a catalyst such as acid.

A dispersion liquid containing the raw material composition can be obtained by mixing the prepared raw material composition to a dispersion medium and dispersing the composition. The dispersion medium may contain water, alcohol, and acid. The blending amounts of water, alcohol, and acid are as described above. A barrier layer can be formed by coating a surface of a substrate with the prepared dispersion liquid and drying the dispersion liquid. The coating pH of the dispersion liquid containing the raw material composition is preferably 4.1 or less and more preferably less than 4.0. When the pH is 4.1 or less or less than 4.0, gelation of the dispersion liquid is suppressed, and coating of the substrate is facilitated. From the viewpoint of further suppressing gelation of the dispersion liquid, the pH of the dispersion liquid (aqueous dispersion liquid) containing the raw material composition is preferably 3.8 or less, more preferably 3.5 or less, and further preferably 3.2 or less. The lower limit of the pH may be, for example, 1.5 or 2.0. The pH is preferably 1.5 or more and 4.1 or less, more preferably 1.5 or more and less than 4.0, and further preferably 2.0 or more and 3.8 or less.

The dispersion liquid containing the raw material composition may contain other components within the range that does not impair the physical properties of the barrier layer. Examples of such components include a dispersant, a stabilizer, a viscosity modifier, and a coloring agent.

The pH of the dispersion liquid containing the raw material composition may be adjusted with either organic acid or inorganic acid. For example, hydrochloric acid, acetic acid, sulfuric acid, nitric acid, and the like can be used. These acids may be used by being diluted with water and/or ethanol.

The substrate can be coated with the dispersion liquid containing the raw material composition by a known printing method such as offset printing, gravure printing, or silk screen printing, or by a known coating method such as roll coating, knife edge coating, or gravure coating. After coating, the dispersion liquid can be heated to, for example, approximately 100°C, and dried and/or cured to form the barrier layer. When the primer layer on the substrate exists, the barrier layer may be formed on the primer layer in the same method as above.

The laminate produced by such a method is excellent in oxygen barrier performance and water vapor barrier performance. That is, excellent oxygen barrier performance and water vapor barrier performance can be obtained even if the vapor-deposited thin film layer including an inorganic oxide or the like is not contained. Therefore, the laminate can be produced at a lower production cost than a laminate having a vapor-deposited thin film layer containing an inorganic oxide or the like. Such a laminate can be suitably used as a laminated film constituting a packaging bag for containing contents.

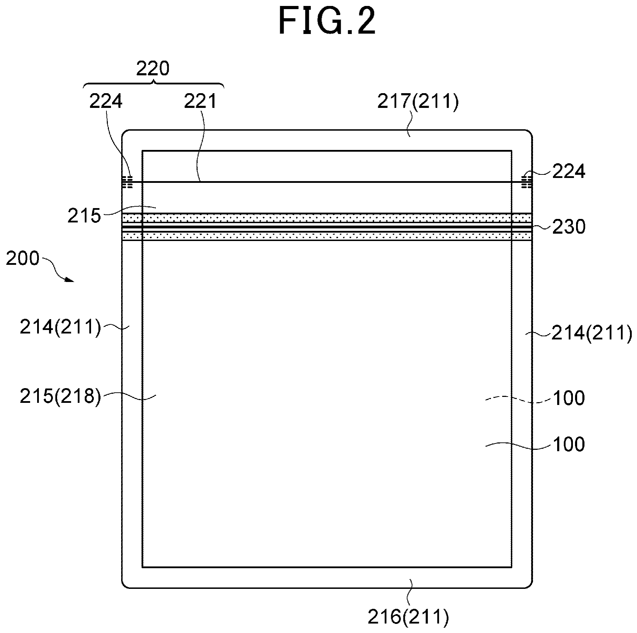

Fig. 2 is a plan view illustrating an embodiment of the packaging bag formed using the laminate. A packaging bag 200 includes a sealed section 211 formed by bonding peripheries of a pair of substantially rectangular laminates 100 and a container section 218 formed between the pair of laminates 100 and 100 by the sealed section 211. That is, the packaging bag 200 is sealed by the sealed section 211 at side end sections 214, a lower end section 216, and an upper end section 217. The packaging bag 200 includes a container section 218 in which a product such as a food product is contained in a non-sealed section 215 surrounded by the sealed section 211. A contained product such as a food product is sealed in the container section 218. Note that the sealed section 211 at the lower end section 216 may be sealed after a product is inserted and contained in the container section 218.

The pair of laminates 100 are overlapped such that the barrier layers 30 face each other. The pair of laminates 100 may be bonded to each other by an adhesive in the sealed section 211. The pair of laminates 100 may constitute the sealed section 211 by bonding heat seal layers disposed on the respective barrier layers 30 with each other.

Since the laminate 100 has excellent oxygen gas barrier performance or water vapor barrier performance, a product contained in the container section 218 can be sufficiently prevented from deteriorating, due to oxygen or water vapor barrier performance. In the packaging bag 200, an optional layer may be disposed on the substrate 10 and the barrier layer 30 or the laminate 100.

A procedure for producing the packaging bag 200 (packaging body) using the laminate 100 will be described below. The pair of laminates 100 is prepared. In the case of the laminates 100, the barrier layers 30 of the laminates 100 or the heat seal layers disposed on the barrier layers 30 are faced to each other, and the barrier layers 30 or the heat seal layers are bonded to each other in a state where, for example, a fastener tape serving as a resealing means 230 is sandwiched therebetween. Thus, the sealed section 211 is formed at positions corresponding to the upper end section 217 and the side end sections 214 and 214, thereby forming the non-sealed section 215 surrounded in a U shape by the sealed section 211.

After forming the sealed section 211, an opening means 220 may be formed. For example, easy-opening processing sections 224 and 224 formed by scored lines are formed on the side end sections 214 and 214. The easy-opening processing sections 224 are not limited to scored lines, and may also be a notch of V-shape, U-shape, I-shape, or the like. Further, a half-cut line 221 may be formed on the surface section of the laminate film 100 between the upper end section 217 and the re-sealing means 230 to provide an opening trajectory from the easy-opening processing sections 224. The half-cut line 221 can be formed using a laser. After forming the opening means 220, the sealed section 211 is cut off and trimmed to form individual packaging bags.

Next, a product is inserted and contained from the lower end section 216 which is unsealed. Subsequently, the laminates 100 are bonded to each other at the lower end section 216 thereby also forming the sealed section 211 on the lower end section 216. In this manner, the packaging bag 200 and the packaging body can be produced. The half-cut line may be formed before the pair of bonded laminates 100 is slit at a predetermined width.

The packaging bag 200 includes, on the upper end side of the non-sealed section 215, the opening means 220 for cut-opening the packaging bag 200 in such a manner as to traverse the side end sections 214 and 214 and between the side end sections 214 and 214, and on the lower side to the opening means 220, the re-sealing means 230 to re-seal the container section 218 after the packaging bag 200 is opened by the opening means 220. The re-sealing means 230 can appropriately adopt a known structure capable of performing opening and sealing repeatedly. For example, it may be a fastener made of a synthesized resin capable of performing sealing repeatedly by a strip-shaped projection and a strip-shaped groove fitting each other, or may be an adhesive seal.

A packaging body includes the packaging bag 200 and a product contained in the container section 218 of the packaging bag 200. The contained product is not particularly limited, and examples thereof include foods, medical products, electronic members, and electronic devices. The packaging body, which includes the packaging bag 200, can suppress the degradation or deterioration of the contained product caused by oxygen and water vapor.

Some embodiments of the present disclosure have been described above, but the present disclosure is not limited to these embodiments. For example, the laminate 100 may include an optional layer or thin film between the substrate 10 and the primer layer or between the primer layer and the barrier layer 30, without significantly impairing the function of the laminate. The shape of the packaging bag 200 and the packaging body is not limited to a four-sided bag. For example, the shape may be a two-sided bag, a three-sided bag, or a back-sealed bag, or may be a standing pouch shape provided with a bottom tape.

The present disclosure includes the following contents.

[1] A laminate including, on a substrate, a barrier layer formed of a barrier composition, in which the barrier composition contains a water-soluble polymer, an inorganic layered compound, and at least one of a metal alkoxide and a hydrolysate thereof, and a mass ratio of the water-soluble polymer to the inorganic layered compound in the barrier composition is 0.3 to 3.0.

[2] The laminate according to [1], in which the barrier layer contains at least one of a silane coupling agent and a hydrolysate thereof.

[3] The laminate according to [2], in which the at least one of a silane coupling agent and a hydrolysate thereof has an epoxy group.

[4] The laminate according to any one of [1] to [3], in which the barrier layer is obtained by drying a dispersion liquid containing the barrier composition and having a pH of less than 4.0.

[5] The laminate according to any one of [1] to [4], in which a total of a mass ratio of the water-soluble polymer and a mass ratio of the inorganic layered compound in the barrier composition is 30 to 60 mass%.

[6] The laminate according to any one of [1] to [5], in which the barrier layer has a thickness of 0.1 to 3.0 $\mu$m.

[7] The laminate according to any one of [1] to [6], in which the water-soluble polymer contains at least one of polyvinyl alcohol and modified polyvinyl alcohol.

[8] The laminate according to [7], in which at least one of the polyvinyl alcohol and the modified polyvinyl alcohol has a polymerization degree of 1500 to 3000.

[9] The laminate according to any one of [1] to [8], in which the barrier layer has a water vapor permeability of 10.0 g/m$^2$/day or less.

[10] The laminate according to any one of [1] to [9], in which the barrier layer has an oxygen permeability of 2.0 mL/m$^2$/day or less.

[11] A packaging bag including the laminate according to any one of [1] to [10].

[12] A packaging body including the packaging bag according to [11] and a product contained in a container section of the packaging bag.

[13] A production method of a laminate including: a step of preparing a raw material composition containing a water-soluble polymer, an inorganic layered compound, and at least one of a metal alkoxide and a hydrolysate thereof in which a mass ratio of the water-soluble polymer to the inorganic layered compound is 0.3 to 3.0; a step of coating a substrate with a dispersion liquid containing the raw material composition; and a step of forming a barrier layer formed of a barrier composition from the dispersion liquid by heating.

[14] The production method of a laminate according to [13], in which the dispersion liquid has a pH of less than 4.0.

Examples

The contents of the present disclosure will be more specifically described below by way of Examples and Comparative Examples. The present disclosure should not be limited to the following Examples.

[Preparation and evaluation of laminate]

(Example 1)

A water/methanol dispersion liquid was prepared by mixing 0.379 g of polyvinyl alcohol (PVA, manufactured by Japan VAM & POVAL Co., Ltd., product name: JF-17, polymerization degree: 1700, completely saponified type) and 3.692 g of water-swellable synthetic mica (MEB, manufactured by Co-op Chemical Co., Ltd., product name: Somasif MEB-3) with a mixed solvent of water and methanol (water:methanol = 90:10 (weight ratio)). To the prepared water/methanol dispersion liquid, 0.209 g of $\gamma$-glycidoxypropyltrimethoxysilane (KBM403) was added and stirred. Subsequently, a hydrochloric acid having a prescribed concentration was added to a water/methanol solution containing 2.453 g of tetraethoxysilane (TEOS) to hydrolyze the TEOS. To the water/methanol dispersion liquid, 14.791 g of the water/methanol solution containing the hydrolyzed TEOS was added thereby preparing a dispersion liquid containing a raw material composition (hereinafter, referred to as a "dispersion liquid"). The mass ratios (calculated from the blending ratios when preparing the dispersion liquid) of the non-volatile components (PVA, MEB, TEOS, and KBM403) contained in this dispersion liquid were shown as the chemical composition of the barrier composition in Table 1. Further, the solid content concentration of the dispersion liquid is shown in Table 1, and the pH of the dispersion liquid is shown in Table 2.

The concentrations of PVA, MEB, TEOS, and KBM403 contained in the barrier composition were 24 mass%, 16 mass%, 50 mass%, and 10 mass%, respectively. Therefore, the mass ratio (P/M) of the water-soluble polymer (P) to the inorganic layered compound (M) was 1.5 as shown in Table 2. Further, the total of the mass ratios of the water-soluble polymer and the inorganic layered compound to the whole of the barrier composition (PM/whole) was 40 mass% as shown in Table 2.

A polyethylene terephthalate (PET) film (thickness: 12 $\mu$m) as a substrate was coated with the prepared dispersion liquid by a bar coating method. After coating, the dispersion liquid was dried by heating to form a barrier layer on the PET film. Thus, a laminate of Example 1 was produced. The barrier layer had a thickness of 1.0 $\mu$m or more and 1.3 $\mu$m or less. The laminate had a thickness of 13.0 $\mu$m or more and 13.5 $\mu$m or less.

The oxygen permeability of the obtained laminate was measured using an oxygen permeability measurement apparatus (manufactured by MOCON Inc., device name: OX-TRAN 2/21). The measurement atmosphere was 30°C and 70% RH. The water vapor permeability was measured using a water vapor permeability measurement apparatus (manufactured by MOCON Inc., device name: PERMATRAN 3/31). The measurement atmosphere was 40°C and 90% RH. The measurement results were as shown in Table 2.

(Examples 2 to 8 and Comparative Example 1)

A laminate was prepared, and the oxygen permeability and water vapor permeability were measured, using the same method as in Example 1, except that the chemical composition of the barrier composition and the pH of the dispersion liquid were changed as in Tables 1 and 2. The obtained results are shown in Table 2.

[Table 1]

| No. | Chemical composition (mass%) of barrier composition | | | | Solid Content concentration (mass%) |
|---|---|---|---|---|---|
| | PVA | MEB | TEOS | KBM403 | |
| Example 1 | 24 | 16 | 50 | 10 | 6.0 |
| Example 2 | 24 | 18 | 48 | 10 | 6.0 |
| Example 3 | 20 | 20 | 50 | 10 | 6.0 |
| Example 4 | 20 | 20 | 55 | 5 | 6.0 |
| Example 5 | 18 | 22 | 45 | 15 | 5.0 |
| Example 6 | 18 | 22 | 50 | 10 | 5.0 |

(continued)

| No. | Chemical composition (mass%) of barrier composition | | | | Solid Content concentration (mass%) |
|---|---|---|---|---|---|
| | PVA | MEB | TEOS | KBM403 | |
| Example 7 | 18 | 24 | 48 | 10 | 5.0 |
| Example 8 | 16 | 24 | 50 | 10 | 5.0 |
| Comparative Example 1 | 35 | 3 | 57 | 5 | 9.0 |

[Table 2]

| No. | P/M | PM/whole (mass%) | pH of dispersion liquid | Oxygen permeability (ml/m$^2$/day) | Water vapor permeability (g/m$^2$/day) |
|---|---|---|---|---|---|
| Example 1 | 1.5 | 40 | 2.5 | 0.64 | 6.88 |
| Example 2 | 1.3 | 42 | 3.1 | 0.15 | 4.83 |
| Example 3 | 1.0 | 40 | 3.0 | 0.49 | 5.47 |
| Example 4 | 1.0 | 40 | 3.0 | 0.58 | 5.47 |
| Example 5 | 0.8 | 40 | 3.0 | 0.61 | 5.72 |
| Example 6 | 0.8 | 40 | 2.9 | 0.22 | 3.44 |
| Example 7 | 0.8 | 42 | 2.8 | 0.050 | 3.82 |
| Example 8 | 0.7 | 40 | 2.9 | 0.23 | 4.94 |
| Comparative Example 1 | 11.7 | 38 | 4.1 | 0.12 | 15 or more |

Examples 1 to 8 having a P/M of 0.3 or more and 3.0 or less had lower water vapor permeability and higher water vapor barrier performance than Comparative Example 1. Examples 1 to 8 had oxygen barrier performance that was high similarly to in Comparative Example 1.

(Comparative Example 2)

A laminate was prepared, and the oxygen permeability and water vapor permeability were measured, using the same method as in Example 1, except that montmorillonite (Mon.) was used instead of synthetic mica, and the chemical composition of the barrier composition and the pH of the dispersion liquid were adjusted as shown in Tables 3 and 4. The obtained results are shown in Table 4.

(Comparative Example 3)

A dispersion liquid was prepared using the same method as in Example 1, except that montmorillonite (Mon.) was used instead of synthetic mica, and the chemical composition of the barrier composition and the pH of the dispersion liquid were adjusted as shown in Tables 3 and 4. A mixed material containing silica was evaporated on the same PET as the PET film used in Example 1 using an electron beam heating-type vacuum deposition apparatus to form a vapor-deposited thin film layer including silica and having a thickness of 20 nm on the PET film as a substrate. Thereafter, a barrier layer was formed on the vapor-deposited thin film layer of the substrate in the same method as in Example 1 to prepare a laminate of Comparative Example 3. In the same method as in Example 1, the oxygen permeability and water vapor permeability were measured, and the obtained results are shown in Table 4.

[Table 3]

| No. | Substrate | Chemical composition (mass%) of barrier composition | | | | Solid Content concentration (mass%) |
|---|---|---|---|---|---|---|
| | | PVA | Mon. | TEOS | KBM403 | |
| Comparative Example 2 | PET | 35 | 3 | 57 | 5 | 9.0 |

(continued)

| No. | Substrate | Chemical composition (mass%) of barrier composition | | | | Solid Content concentration (mass%) |
|---|---|---|---|---|---|---|
| | | PVA | Mon. | TEOS | KBM403 | |
| Comparative Example 3 | PET/SiO deposited | 35 | 3 | 57 | 5 | 9.0 |

[Table 4]

| No. | P/M | PM/whole (mass%) | pH of dispersion liquid | Oxygen permeability (ml/m$^2$/day) | Water vapor permeability (g/m$^2$/day) |
|---|---|---|---|---|---|
| Comparative Example 2 | 11.7 | 38 | 2.8 | 0.58 | 12.33 |
| Comparative Example 3 | 11.7 | 38 | 2.8 | 0.23 | 1.57 |

Comparative Example 2 including montmorillonite as the inorganic layered compound and having a P/M adjusted to a high value similarly to in Comparative Example 1 of Tables 1 and 2 had water vapor barrier performance that was low similarly to in Comparative Example 1. This demonstrated that when the value of P/M is high, the laminate does not have water vapor barrier performance regardless of the type of the inorganic layered compound. In Comparative Example 3 in which a metal thin film was deposited on the substrate of Comparative Example 2 to form a vapor-deposited thin film layer in order to impart barrier performance against oxygen and water vapor, the vapor-deposited thin film layer caused gas barrier performance to improve, and particularly, water vapor barrier performance significantly improved. This demonstrated that when the value of P/M is high, a vapor-deposited thin film layer needs to be provided in order to ensure water vapor barrier performance. On the other hand, when the P/M is lowered as in Examples 1 to 8, barrier performance against water vapor can be improved without providing a vapor-deposited thin film layer.

(Examples 9 to 15)

A laminate was prepared, and the oxygen permeability and water vapor permeability were measured, using the same method as in Example 1, except that the chemical composition of the barrier composition and the pH of the dispersion liquid were adjusted as shown in Tables 5 and 6. Further, the prepared dispersion liquid was left to stand in the atmosphere, and a time to gelation of the dispersion liquid was measured. The obtained results are shown in Table 6. In addition, a time to gelation of the dispersion liquid used in Comparative Example 3 was also measured.

[Table 5]

| No. | Chemical composition (mass%) of barrier composition | | | | Solid Content concentration (mass%) |
|---|---|---|---|---|---|
| | PVA | MEB | TEOS | KBM403 | |
| Example 9 | 26 | 24 | 50 | 0 | 7.0 |
| Example 10 | 30 | 30 | 40 | 0 | 5.0 |
| Example 11 | 18 | 24 | 48 | 10 | 5.0 |
| Example 12 | 26 | 24 | 50 | 0 | 6.0 |
| Example 13 | 25 | 25 | 45 | 5 | 6.0 |
| Example 14 | 30 | 15 | 45 | 10 | 6.0 |
| Example 15 | 18 | 27 | 45 | 10 | 5.0 |

[Table 6]

| No. | P/M | PM/whole (mass%) | pH of dispersion liquid | Time to gelation | Oxygen permeability (ml/m$^2$/day) | Water vapor permeability (g/m$^2$/day) |
|---|---|---|---|---|---|---|
| Example 9 | 1.1 | 50 | 4.1 | 3 hours | 1.40 | 9.09 |
| Example 10 | 1.0 | 60 | 4.1 | 2 hours | 1.50 | 10 or more |

(continued)

| No. | P/M | PM/whole (mass%) | pH of dispersion liquid | Time to gelation | Oxygen permeability (ml/m²/day) | Water vapor permeability (g/m²/day) |
|---|---|---|---|---|---|---|
| Example 11 | 0.75 | 42 | 3.0 | 48 hours | 0.24 | 4.10 |
| Example 12 | 1.1 | 50 | 3.1 | 18 hours | 0.63 | 8.09 |
| Example 13 | 1.0 | 50 | 2.8 | 30 hours | 0.71 | 5.40 |
| Example 14 | 2.0 | 45 | 3.1 | 24 hours | 0.050 | 3.95 |
| Example 15 | 0.7 | 45 | 2.7 | 48 hours | 0.34 | 3.50 |

The dispersion liquid of Comparative Example 3 had not undergone gelation after one week. On the other hand, in Examples shown in Tables 5 and 6, the longest time to gelation was 48 hours. This demonstrated that when the value of P/M is lowered, gelation is facilitated. As shown in Table 6, a time to gelation was relatively short in Examples 9 and 10 having a pH of 4.1. This demonstrated that lowering the pH of the dispersion liquid suppresses gelation of the dispersion liquid and facilitates coating of the substrate with the dispersion liquid.

(Example 16)

A primer layer was formed on a biaxially stretched polypropylene film (OPP film). The obtained product was used as a substrate. Specifically, a mixture liquid for forming a primer layer (solid content: 2 mass%) was prepared by blending 3-isocyanatepropyltrimethoxysilane, acryl polyol, and aliphatic isocyanate to a diluting solvent (ethyl acetate) at prescribed mass ratios. One surface of the OPP film was coated with the mixture liquid by a gravure coating method. After coating, the mixture liquid was dried to form a primer layer on one surface of the OPP. For the OPP film, a commercially available product (manufactured by AJ Plast Public Co., Ltd, product name: PJ201, thickness: 20 μm) composed of a homopolymer-type polypropylene film and a copolymer-type polypropylene film was used.

A barrier layer was formed on the substrate using the same method as in Example 1, except that a barrier composition having the chemical composition shown in Table 7 was used after the primer layer was formed on the OPP film, and the pH of the dispersion liquid was adjusted to a value shown in Table 8. In the same method as in Example 1, an evaluation film was prepared, and the oxygen permeability and water vapor permeability were measured. The obtained results are shown in Table 8.

(Comparative Example 4)

A primer layer was formed on an OPP film in the same method as in Example 16. The obtained product was used as a substrate. A barrier layer was formed on the substrate using the same method as in Example 1, except that a barrier composition having the chemical composition shown in Table 7 was used, and the pH of the dispersion liquid was adjusted to the value shown in Table 8. In the same method as in Example 1, an evaluation film was prepared, and the oxygen permeability and water vapor permeability were measured. The obtained results are shown in Table 8.

(Examples 17 to 19 and Comparative Example 5)

A laminate and an evaluation film were prepared, and the oxygen permeability and water vapor permeability were measured, using the same method as in Example 1, except that an aluminum deposited barrier film (VM-CPP film) was used as a substrate, the chemical composition of the barrier composition was as shown in Table 7, and the pH of the dispersion liquid was adjusted as shown in Table 8. The obtained results are shown in Table 8. For the VM-CPP film, a commercially available product (manufactured by Toray Advanced Film Co., Ltd., product name: VM-CPP2703, thickness: 20 μm) was used.

[Table 7]

| No. | Substrate | Chemical composition (mass%) of barrier composition | | | | Solid Content concentration (mass%) |
|---|---|---|---|---|---|---|
| | | PVA | MEB | TEOS | KBM403 | |
| Comparative Example 4 | OPP/Primer | 35 | 3 | 57 | 5 | 9.0 |

(continued)

| No. | Substrate | Chemical composition (mass%) of barrier composition | | | | Solid Content concentration (mass%) |
| --- | --- | --- | --- | --- | --- | --- |
| | | PVA | MEB | TEOS | KBM403 | |
| Example 16 | OPP/Primer | 20 | 25 | 45 | 10 | 5.0 |
| Comparative Example 5 | VMCPP | 35 | 3 | 57 | 5 | 9.0 |
| Example 17 | VMCPP | 30 | 15 | 45 | 10 | 6.0 |
| Example 18 | VMCPP | 18 | 24 | 48 | 10 | 5.0 |
| Example 19 | VMCPP | 24 | 18 | 48 | 10 | 6.0 |

[Table 8]

| No. | P/M | PM/whole (mass%) | pH of dispersion liquid | Oxygen permeability (ml/m2/day) | Water vapor permeability (g/m2/day) |
| --- | --- | --- | --- | --- | --- |
| Comparative Example 4 | 11.7 | 38 | 2.8 | 0.58 | 12.33 |
| Example 16 | 0.8 | 45 | 2.7 | 1.74 | 2.08 |
| Comparative Example 5 | 11.7 | 38 | 2.8 | 0.59 | 0.41 |
| Example 17 | 2.0 | 45 | 3.1 | 0.41 | 0.22 |
| Example 18 | 0.8 | 42 | 2.8 | 0.68 | 0.12 |
| Example 19 | 1.3 | 42 | 3.1 | 0.37 | 0.010 |

Even when the substrate including the primer layer was used, water vapor barrier performance did not improve in Comparative Example 4 having a P/M larger than in Example 16. On the other hand, oxygen barrier performance and water vapor barrier performance improved even when the primer layer was formed on the substrate, in Example 16 having a P/M smaller than in Comparative Example 4. This demonstrated that the value of P/M influences gas barrier performance regardless of the absence or present of the primer layer.

When the VM-CPP film was used as the substrate, high barrier performance was exhibited against oxygen and water vapor, even in Comparative Example 5 having a P/M larger than in Examples 17 to 19. Here, it was demonstrated that gas barrier performance further improves in Examples 17 to 19 having a P/M smaller than in Comparative Example 5, and the numerical value of water vapor permeability particularly decreases in all Examples. This demonstrated that a barrier layer having a P/M value adjusted low improves gas barrier performance regardless of the type of the substrate.

(Examples 20 to 22)

PVA having a polymerization degree of 2400 (manufactured by Kuraray Co., Ltd., product name: PVA-124, completely saponified type) and PVA having a polymerization degree of 4000 (manufactured by Japan VAM & POVAL Co., Ltd., product name: JC-40, completely saponified type) were prepared. A laminate was prepared, and the oxygen permeability and water vapor permeability were measured, using the same method as in Example 1, except that PVA having a polymerization degree shown in Table 9 was used, and the chemical composition of the barrier composition was as shown in Table 9. The obtained results are shown in Table 10.

[Table 9]

| | Polymerization degree of PVA | Chemical composition (mass%) of barrier composition | | | | Solid Content concentration (mass%) |
| --- | --- | --- | --- | --- | --- | --- |
| | | PVA | MEB | TEOS | KBM403 | |
| Example 20 | 1700 | 30 | 15 | 47 | 8 | 5.0 |
| Example 21 | 2400 | 30 | 15 | 47 | 8 | 5.0 |
| Example 22 | 4000 | 30 | 15 | 47 | 8 | 4.0 |

[Table 10]

|  | P/M | PM/whole (mass%) | pH of dispersion liquid | Oxygen permeability (ml/m$^2$/day) | Water vapor permeability (g/m$^2$/day) |
|---|---|---|---|---|---|
| Example 20 | 2.0 | 45 | 3.1 | 0.10 | 4.01 |
| Example 21 | 2.0 | 45 | 3.2 | 0.050 | 3.03 |
| Example 22 | 2.0 | 45 | 2.8 | 0.13 | 6.99 |

The gas barrier performances of the laminates using multiple types of PVAs having different polymerization degrees were compared, with the result that the laminate having a polymerization degree of 2400 exhibited the highest gas barrier performance. On the other hand, the laminate using PVA having a polymerization degree of 4000 exhibited gas barrier performance lower than laminates having polymerization degrees of 1700 and 2400.

(Comparative Example 6 and Example 23)

A laminate was prepared, and the oxygen permeability and water vapor permeability were measured, using the same method as in Example 1, except that the chemical composition of the barrier composition was as shown in Table 11. The obtained results are shown in Table 12.

[Table 11]

|  | Chemical composition (mass%) of barrier composition | | | | Solid Content concentration (mass%) |
|---|---|---|---|---|---|
|  | PVA | MEB | TEOS | KBM403 |  |
| Comparative Example 6 | 40 | 50 | 0 | 10 | 4.5 |
| Example 23 | 20 | 25 | 45 | 10 | 5.0 |

[Table 12]

|  | P/M | PM/whole (mass%) | pH of dispersion liquid | Oxygen permeability (ml/m$^2$/day) | Water vapor permeability (g/m$^2$/day) |
|---|---|---|---|---|---|
| Comparative Example 6 | 0.8 | 90 | - | 2.54 | 11.53 |
| Example 23 | 0.8 | 45 | 2.7 | 0.050 | 2.89 |

Although the values of P/M for Example 23 and Comparative Example 6 are the same, Comparative Example 6 does not contain TEOS as a metal alkoxide. A comparison of gas barrier performances in Example 23 and Comparative Example 6 demonstrated that Example 23 exhibited better gas barrier performance. As confirmed from these results, adding the metal alkoxide can improve gas barrier performance of the laminate.

(Example 24)

A laminate was prepared, and the oxygen permeability and water vapor permeability were measured, using the same method as in Example 1, except that the chemical composition of the barrier composition was as shown in Table 13. The obtained results are shown in Table 14. In Tables 13 and 14, the results of Examples 3 and 4 are also shown for comparison.

[Table 13]

|  | Chemical composition (mass%) of barrier composition | | | | Solid Content concentration (mass%) |
|---|---|---|---|---|---|
|  | PVA | MEB | TEOS | KBM403 |  |
| Example 24 | 20 | 20 | 60 | 0 | 6.0 |
| Example 3 | 20 | 20 | 50 | 10 | 6.0 |

(continued)

| | Chemical composition (mass%) of barrier composition | | | | Solid Content concentration (mass%) |
| --- | --- | --- | --- | --- | --- |
| | PVA | MEB | TEOS | KBM403 | |
| Example 4 | 20 | 20 | 55 | 5 | 6.0 |

[Table 14]

| | P/M | PM/whole (mass%) | pH of dispersion liquid | Oxygen permeability | Water vapor permeability |
| --- | --- | --- | --- | --- | --- |
| | | | | (ml/m$^2$/day) | (g/m$^2$/day) |
| Example 24 | 1.0 | 40 | 2.7 | 1.89 | 9.37 |
| Example 3 | 1.0 | 40 | 3.0 | 0.49 | 5.47 |
| Example 4 | 1.0 | 40 | 3.0 | 0.58 | 5.47 |

Although the value of P/M of Example 24 is the same as those of Examples 3 and 4, Example 24 does not contain KBM403 as a silane coupling agent. When the gas barrier performance in Example 24 is compared with those in Examples 3 and 4, Examples 3 and 4 had better gas barrier performance. As confirmed from these results, adding the silane coupling agent can further improve gas barrier performance of the laminate.

[Calculation of gas permeability of barrier layer alone]

In each of Examples and Comparative Examples, the gas permeability of the barrier layer alone was determined. The results are shown in Table 15. The gas permeability of the barrier layer alone was determined according to the following mathematical expression using the gas permeability of the laminate actually measured in the above-described Examples and the actually measured value of the gas permeability of the substrate alone. The actually measured value of the gas permeability of the substrate alone was measured in the same method as in the measurement of the actually measured value of the laminate.

$$1/P_{total} = 1/P_{film} + 1/P_{base}$$

$P_{total}$: Gas permeability (actually measured value) of laminate
$P_{film}$: Gas permeability of barrier layer alone
$P_{base}$: Gas permeability (actually measured value) of substrate alone

[Table 15]

| No. | Gas permeability of laminate (actually measured value) | | Gas permeability of barrier layer alone (calculated value) | |
| --- | --- | --- | --- | --- |
| | Oxygen permeability | Water vapor permeability | Oxygen permeability | Water vapor permeability |
| | (ml/m$^2$/day) | (g/m$^2$/day) | (ml/m$^2$/day) | (g/m$^2$/day) |
| Example 1 | 0.64 | 6.88 | 0.64 | 7.82 |
| Example 2 | 0.15 | 4.83 | 0.15 | 5.28 |
| Example 3 | 0.49 | 5.47 | 0.49 | 6.05 |
| Example 4 | 0.58 | 5.47 | 0.58 | 6.05 |
| Example 5 | 0.61 | 5.72 | 0.61 | 6.36 |
| Example 6 | 0.22 | 3.44 | 0.22 | 3.66 |
| Example 7 | 0.050 | 3.82 | 0.050 | 4.09 |
| Example 8 | 0.23 | 4.94 | 0.23 | 5.41 |

(continued)

| No. | Gas permeability of laminate (actually measured value) | | Gas permeability of barrier layer alone (calculated value) | |
|---|---|---|---|---|
| | Oxygen permeability | Water vapor permeability | Oxygen permeability | Water vapor permeability |
| | (ml/m²/day) | (g/m²/day) | (ml/m²/day) | (g/m²/day) |
| Comparative Example 1 | 0.12 | 15 or more | 0.12 | - |
| Comparative Example 2 | 0.58 | 12.33 | 0.58 | 15.7 |
| Comparative Example 3 | 0.23 | 1.57 | 0.23 | 1.61 |
| Example 9 | 1.40 | 9.09 | 1.41 | 10.8 |
| Example 10 | 1.50 | 10 or more | 1.51 | 10 or more |
| Example 11 | 0.24 | 4.10 | 0.24 | 4.42 |
| Example 12 | 0.63 | 8.09 | 0.63 | 9.43 |
| Example 13 | 0.71 | 5.40 | 0.71 | 5.97 |
| Example 14 | 0.050 | 3.95 | 0.050 | 4.24 |
| Example 15 | 0.34 | 3.50 | 0.34 | 3.73 |
| Comparative Example 4 | 0.58 | 12.33 | 0.58 | - |
| Example 16 | 1.74 | 2.08 | 1.74 | 3.11 |
| Comparative Example 5 | 0.59 | 0.41 | 0.61 | 0.69 |
| Example 17 | 0.41 | 0.22 | 0.42 | 0.28 |
| Example 18 | 0.68 | 0.12 | 0.70 | 0.14 |
| Example 19 | 0.37 | 0.010 | 0.38 | 0.010 |
| Example 20 | 0.10 | 4.01 | 0.10 | 4.31 |
| Example 21 | 0.050 | 3.03 | 0.050 | 3.20 |
| Example 22 | 0.13 | 6.99 | 0.13 | 7.97 |
| Comparative Example 6 | 2.54 | 11.53 | 2.58 | 14.45 |
| Example 23 | 0.050 | 2.89 | 0.050 | 3.04 |
| Example 24 | 1.89 | 9.37 | 1.91 | 11.21 |

The gas permeability of the barrier layer alone was determined by subtracting the actually measured value of the substrate alone from the actually measured value of the laminate. In each of Examples, the gas permeability of the barrier layer alone exhibited a slightly higher value than the gas permeability of the laminate in both oxygen and water vapor. Therefore, it is considered that the gas barrier performance of the barrier layer alone is equivalent to the gas barrier performance of the laminate.

[Measurement of light transmittance of dispersion liquid]

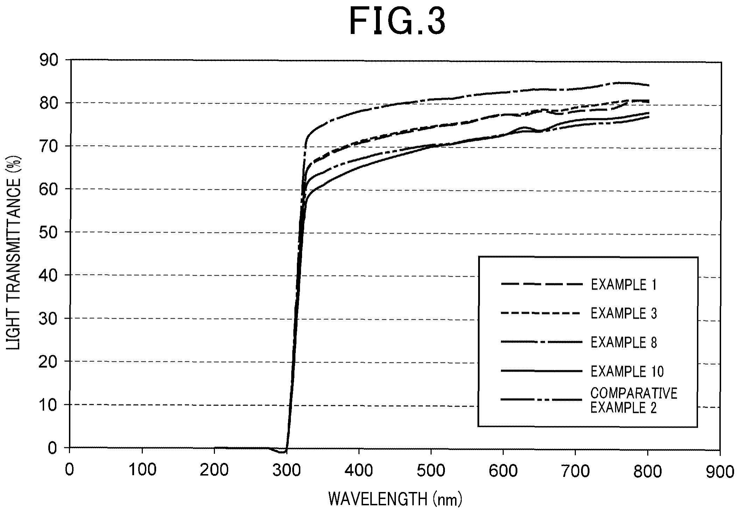

For the dispersion liquid prepared in each of Examples 1, 3, 8, and 10 and Comparative Example 2, the light transmittance was measured. Regarding the measurement of the transmittance, a spectrophotometer (manufactured by Hitachi High-Technologies Corporation, product name: U-3010) was used to measure light transmittance in a wavelength range of 200 nm or more and 800 nm or less. The results are shown in Fig. 3. There was a tendency that Examples 1, 3, and 8 using synthetic mica in the inorganic layered compound had higher light transmittance than Comparative Example 2 using montmorillonite. Further, Examples 1, 3, and 8 exhibited higher light transmittance than Comparative Example 2, in spite of the fact that their P/Ms were smaller than that in Comparative Example 2, and that their ratios of the inorganic layered compound in the dispersion liquid were higher. Therefore, it is considered that when the inorganic layered compound contains synthetic mica, a transparent laminate having high light transmittance can be prepared even when the barrier layer contains a large amount of the inorganic layered compound. On the other hand, it is considered that Example 10, in which a time to gelation was short so that gelation was facilitated, had light transmittance that was lower than those of Examples 1, 3, and 8 and equivalent to that of Comparative Example 2.

[Industrial Applicability]

According to the present disclosure, a laminate having high oxygen barrier performance and water vapor barrier performance and a production method of a laminate are provided. Further, a packaging bag and a packaging body each using this laminate can be provided.

[Reference Signs List]

| | |
|---|---|
| 10 | Substrate |
| 30 | Barrier layer |
| 100 | Laminate |
| 200 | Packaging bag |
| 211 | Sealed section |
| 214 | Side end section |
| 215 | Non-sealed section |
| 216 | Lower end section |
| 217 | Upper end section |
| 218 | Container section |
| 220 | Opening means |
| 221 | Half-cut line |
| 224 | Easy-opening processing section |
| 230 | Re-sealing means |

**Claims**

1. A laminate comprising a substrate and a barrier layer formed of a barrier composition, wherein

   the barrier composition contains a water-soluble polymer, an inorganic layered compound, and at least one of a metal alkoxide and a hydrolysate thereof, and
   a mass ratio of the water-soluble polymer to the inorganic layered compound in the barrier composition is 0.3 or more and 3.0 or less.

2. The laminate according to claim 1, wherein the barrier layer contains at least one of a silane coupling agent and a hydrolysate thereof.

3. The laminate according to claim 2, wherein the at least one of a silane coupling agent and a hydrolysate thereof has an epoxy group.

4. The laminate according to claim 1, wherein the barrier layer is obtained by drying a dispersion liquid containing the barrier composition and having a pH of 4.1 or less.

5. The laminate according to claim 1, wherein a total of a mass ratio of the water-soluble polymer and a mass ratio of the inorganic layered compound in the barrier composition is 30 mass% or more and 60 mass% or less.

6. The laminate according to claim 1, wherein the barrier layer has a thickness of 0.1 $\mu$m or more and 3.0 $\mu$m or less.

7. The laminate according to claim 1, wherein the water-soluble polymer contains at least one of polyvinyl alcohol and modified polyvinyl alcohol.

8. The laminate according to claim 7, wherein at least one of the polyvinyl alcohol and the modified polyvinyl alcohol has a polymerization degree of 1500 or more and 4200 or less.

9. The laminate according to claim 1, wherein the barrier layer has a water vapor permeability of 10.0 g/m$^2$/day or less.

**10.** The laminate according to claim 1, wherein the barrier layer has an oxygen permeability of 2.0 mL/m$^2$/day or less.

**11.** A packaging bag comprising the laminate according to any one of claims 1 to 10.

**12.** A packaging body comprising the packaging bag according to claim 11 and a product contained in a container section of the packaging bag.

**13.** A production method of a laminate comprising:

a step of preparing a raw material composition containing a water-soluble polymer, an inorganic layered compound, and at least one of a metal alkoxide and a hydrolysate thereof in which a mass ratio of the water-soluble polymer to the inorganic layered compound is 0.3 or more and 3.0 or less;
a step of coating a substrate with a dispersion liquid containing the raw material composition; and
a step of forming a barrier layer formed of a barrier composition from the dispersion liquid by heating.

**14.** The production method of a laminate according to claim 13, wherein the dispersion liquid has a pH of 4.1 or less.

# FIG.1

# FIG.2

# FIG.3

EP 4 653 191 A1

# INTERNATIONAL SEARCH REPORT

| | International application No. |
| --- | --- |
| | **PCT/JP2024/000869** |

| A. | CLASSIFICATION OF SUBJECT MATTER |
| --- | --- |

*B32B 27/18*(2006.01)i; *B32B 27/30*(2006.01)i; *B65D 65/40*(2006.01)i
FI:  B32B27/18 Z; B32B27/30 102; B65D65/40 D

According to International Patent Classification (IPC) or to both national classification and IPC

| B. | FIELDS SEARCHED |
| --- | --- |

Minimum documentation searched (classification system followed by classification symbols)

B32B27/18; B32B27/30; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2001-009992 A (TOPPAN PRINTING CO., LTD.) 16 January 2001 (2001-01-16) examples 4-6, paragraph [0001] | 1, 4-14 |
| Y | | 2-3 |
| X | JP 2000-355080 A (TOPPAN PRINTING CO., LTD.) 26 December 2000 (2000-12-26) examples 4-6, claim 8 | 1, 4-14 |
| Y | | 2-3 |
| X | WO 2020/218124 A1 (DIC CORP.) 29 October 2020 (2020-10-29) examples 8-9, claims 9-10, paragraphs [0072]-[0074], [0089] | 1-14 |
| Y | | 2-3 |
| X | WO 2022/085586 A1 (TOPPAN PRINTING CO., LTD.) 28 April 2022 (2022-04-28) claims 1, 3-5, paragraphs [0031], [0035]-[0036], [0041]-[0042], [0060] | 1-14 |
| Y | | 2-3 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 March 2024** | **26 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/000869** |

| C. | DOCUMENTS CONSIDERED TO BE RELEVANT | |
| --- | --- | --- |
| Category* | Citation of document, with indication, where appropriate, of the relevant passages | Relevant to claim No. |
| X | JP 2001-293814 A (TOPPAN PRINTING CO., LTD.) 23 October 2001 (2001-10-23) claims 11-13, paragraphs [0001], [0068], [0073], [0081]-[0082], [0085] | 1, 4-14 |
| Y | | 2-3 |

Form PCT/ISA/210 (second sheet) (July 2022)

**INTERNATIONAL SEARCH REPORT**
Information on patent family members

International application No.

**PCT/JP2024/000869**

| Patent document cited in search report | | | Publication date (day/month/year) | Patent family member(s) | | | Publication date (day/month/year) |
|---|---|---|---|---|---|---|---|
| JP | 2001-009992 | A | 16 January 2001 | (Family: none) | | | |
| JP | 2000-355080 | A | 26 December 2000 | (Family: none) | | | |
| WO | 2020/218124 | A1 | 29 October 2020 | JP | 2022-92075 | A | |
| WO | 2022/085586 | A1 | 28 April 2022 | US | 2023/0257172 | A1 | |
| | | | | claims 1, 3-5, paragraphs [0041], [0045]-[0046], [0051]-[0052], [0074] | | | |
| | | | | EP | 4234235 | A1 | |
| | | | | CN | 116323210 | A | |
| JP | 2001-293814 | A | 23 October 2001 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000254994 A
- JP 2020069801 A

- WO 2016158794 A